# EUROPÄISCHE PATENTSCHRIFT

(11) **EP 0 893 837 B1**
(45) Veröffentlichungstag und Bekanntmachung des Hinweises auf die Patenterteilung: **26.04.2000**
(21) Anmeldenummer: 98113180.8
(22) Anmeldetag: 15.07.1998
(51) Int. Cl.: H01M 8/18, H01M 8/06

(54) **Regenerative elektrochemische Brennstoffzelle**
Regenerative electrochemical fuel cell
Pile à combustible régénerable

(30) Priorität: 19.07.1997 DE 19731096
(43) Veröffentlichungstag der Anmeldung: 27.01.1999
(73) Patentinhaber: Institut für Festkörper- und Werkstofforschung Dresden e.V., 01069 Dresden (DE)
(72) Erfinder: Gebert, Annnet, Dr., 01097 Dresden (DE); Krieg, Torsten, 02708 Löbau (DE)
(74) Vertreter: Rauschenbach, Dieter

(56) Entgegenhaltungen:
- EP-A- 0 718 904
- US-A- 4 048 383
- US-A- 5 316 643
- PATENT ABSTRACTS OF JAPAN vol. 009, no. 015 (E-291), 22. Januar 1985 & JP 59 163770 A (NIHON DENCHI KK), 14. September 1984

## Beschreibung

Die Erfindung bezieht sich auf das Gebiet der Elektrochemie und betrifft eine regenerative elektrochemische Brennstoffzelle mit flüssigem Elektrolyten zur Umwandlung elektrischer Energie in chemische Energie mittels Elektrolyse und zur Umwandlung chemischer Energie in elektrische Energie mittels kalter Verbrennung.

Regenerative elektrochemische Brennstoffzellen auf der Basis von Wasserstoff und Sauerstoff stellen eine Kombination einer Wasserelektrolysezelle mit einer Wasserstoff-Sauerstoff-Brennstoffzelle dar. Die Vorteile derartiger Zellen gegenüber herkömmlichen Akkumulatoren liegen in:
- der Verwendung von Säuren/Laugen als billigem und gut verfügbarem Reaktionsmedium
- dem Verzicht auf umweltschädigende Stoffe
- der Möglichkeit, die Träger der gespeicherten chemischen Energie auch außerhalb der Zelle zu speichern, so daß im Prinzip keine Begrenzung der Speicherkapazität besteht.

Bekannt sind elektrochemische Brennstoffzellen, die im Niedertemperaturbereich betrieben werden und bei denen eine Flüssigkeit oder eine Polymermembran als Elektrolyt verwendet ist (J. Ahn, R. Holze, J. Appl. Elektrochem. 22(1992) 1167-1174).

Nach der Funktionalität der Elektroden existieren 3 Typen der regenerativen elektrochemischen Brennstoffzellen:
a) An der positiven Elektrode erfolgt im Brennstoffzellen-Modus die O₂-Reduktion und im Elektrolyse-Modus die O₂-Entwicklung. An der negativen Elektrode erfolgt im Brennstoffzellen-Modus die H₂-Oxidation und im Elektrolyse-Modus die H₂-Entwicklung.
   Der Vorteil dieses Typs besteht darin, daß sich in den Gasräumen immer die selbe Gasart befindet (L.L. Swette, A.B. LaConti, S. A. McCatty, J. Power Sources 47(1994) 343-351). Allerdings gelang es bisher nicht, Materialien zu finden, die eine ausreichende katalytische Wirkung und chemische Beständigkeit sowohl für die O₂-Reduktion als auch für die O₂-Entwicklung aufweisen.
b) Bei einem weiteren Typ erfolgt an der Reduktionselektrode die O₂-Reduktion im Brennstoffzellen-Modus und die H₂-Entwicklung im Elektrolyse-Modus. An der Oxidationselektrode erfolgt die H₂-Oxidation im Brennstoffzellen-Modus und die O₂-Entwicklung im Elektrolyse-Modus.
   Nachteilig bei diesem Zellentyp ist das notwendige Reinigen der Gaskammern mit Inertgas und eine erforderliche Aktivierung der Elektroden beim Wechseln des Betriebsmodus. Des weiteren treten auch hier Materialprobleme auf, welche die Anzahl der Lade-Entlade-Zyklen stark einschränken (F. Mahlendorf et al., Reversible Solid Polymer Fuell Cell, 18^{th} Intern. Power Sources Symposium, p. 273-280).
c) Ein dritter Typ besteht darin, daß separate Elektroden für die Elektrolyse und die kalte Verbrennung verwendet werden. Die Gasentwicklung und -verbrennung erfolgen lokal getrennt. Problematisch sind hier vor allem die Speicherung der Energieträger und die Regulierung des Elektrolytkreislaufs (US-PS 3 981 745).
   Bei allen beschriebenen Typen kommen prinzipielle Schwierigkeiten hinzu, wie die Aufrechterhaltung einer bestimmten Gasfeuchtigkeit durch externe oder interne Hydration und der osmotische Wassertransport durch die Membran bei der Verwendung von Polymerelektrolytmembranen.

Bei Wasserstoff-Brennstoffzellen ist es auch bekannt, mit rotierenden Elektroden zu arbeiten. Dabei sind die Elektroden als kreisförmige Scheiben ausgebildet und auf einer horizontal gelagerten Welle befestigt, die so angeordnet ist, daß sich die rotierenden Elektrodenscheiben mit einem Teil ihrer Oberfläche durch den flüssigen Elektrolyten bewegen, während die übrige Oberfläche der Elektrodenscheiben außerhalb des Elektrolyten jeweils durch einen Gas-Adsorptionsraum läuft, dem die Reaktionsgase H₂ bzw. O₂ zugeführt werden (DE 35 30 010 A1). Bei dieser Zelle ist in nachteiliger Weise für die Rotation der Elektroden ein zusätzlicher Energieaufwand erforderlich. Außerdem ist die Konstruktion schwer zu realisieren, da sich die Achsen-Lager im Elektrolyten befinden. Von Nachteil ist auch, daß für die Speicherung der Reaktionsgase zusätzliche Einrichtungen erforderlich sind.

Der Erfindung liegt die Aufgabe zugrunde, den Aufbau und die Funktionsweise von elektrolytisch regenerativen Brennstoffzellen so zu verändern, daß die katalytische Wirksamkeit und die chemische Beständigkeit der Elektroden erhöht sowie eine kompakte Brennstoffzelle-Elektrolyse-Einheit ohne Zusatzvorrichtung realisiert werden können.

Diese Aufgabe ist bei der in den Patentansprüchen beschriebenen regenerativen elektrochemischen Brennstoffzelle gelöst.

Die erfindungsgemäße Brennstoffzelle mit flüssigem Elektrolyten zur Umwandlung elektrischer Energie in chemische Energie mittels Elektrolyse und zur Umwandlung chemischer Energie in elektrische Energie mittels kalter Verbrennung besteht aus mehreren Kammern, die den flüssigen Elektrolyten aufnehmen und die untereinander kommunizierend für den Elektrolyten ausgeführt sind. Außerdem sind die Kammern zumindest teilweise mit Elektroden für die Elektrolyse und die kalte Verbrennung bestückt. Dabei sind die Elektroden für die kalte Verbrennung im Elektrolyten schwimmend ausgeführt und ragen mit einem Teil ihres Elektrodenkörpers teilweise aus dem Elektrolyten heraus.

Gemäß einer zweckmäßigen Ausgestaltung der Erfindung weisen die schwimmend ausgeführten Elektroden zumindest in ihrem den Flüssigkeitsspiegel des Elektrolyten durchdringenden Körperbereich eine oberflächenvergrößernde Geometrie auf.

Außerdem sind die schwimmend ausgebildeten Elektroden über flexible Stromleiter mit den Stromversorgungsanschlußpunkten der Brennstoffzelle verbunden.

Gemäß einer weiteren zweckmäßigen Ausgestaltung der Erfindung enthält die Brennstoffzelle außer den mit Elektroden bestückten Kammern eine weitere Kammer zur Aufnahme und Pufferung von Elektrolytflüssigkeit.

Die erfindungsgemäße Brennstoffzelle zeichnet sich gegenüber den bekannten regenerativen elektrochemischen Brennstoffzellen durch folgende Vorteile aus:
a) Durch den Einsatz der schwimmend ausgeführten Elektroden, die mit einem Teil ihres Elektrodenkörpers teilweise aus dem Elektrolyten herausragen, kann auf poröse Gasdiffusionselektroden verzichtet werden.
b) Das erfindungsgemäße Konstruktionsprinzip ermöglicht die Durchführung der Elektrolyse-Reaktion und der kalten Verbrennung an getrennten Elektroden. Dadurch können die unterschiedliche Elektroden für ihre spezifischen Funktionen optimal gestaltet werden.
c) Da das bei der kalten Verbrennung entstehende Wasser bei der Elektrolyse wieder zerlegt wird, können technische Einrichtungen zur Wasserentfernung entfallen. Außerdem entfallen auch separate Anlagen zur Gaszufuhr, da die bei der Elektrolyse entstehenden Gase in der Zelle für die nachfolgende kalte Verbrennung gespeichert werden.

Nachstehend ist die Erfindung an zwei Ausführungsbeispielen näher erläutert. In der zugehörigen Zeichnung zeigen in Prinzipdarstellung:
- Fig. 1:: eine Brennstoffzelle mit separaten Elektroden für die Elektrolyse und die kalte Verbrennung,
- Fig. 2:: eine Brennstoffzelle mit gemeinsamen Elektroden für die Elektrode und die kalte Verbrennung.

### Beispiel 1

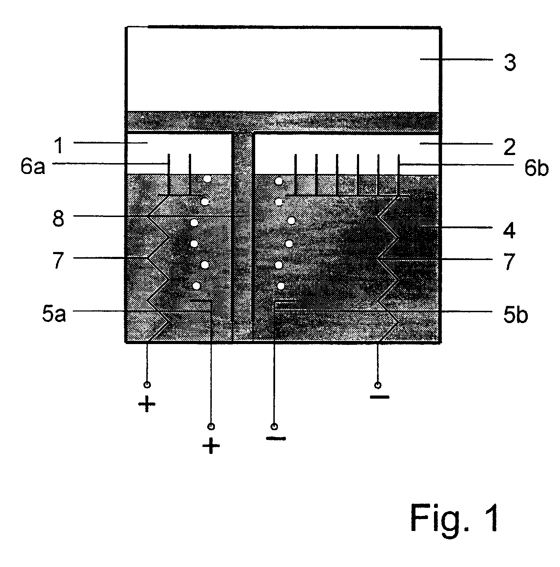

Die in Fig. 1 dargestellte regenerative Brennstoffzelle weist drei kommunizierend miteinander verbundene Kammern 1, 2 und 3 auf. Die erste und die zweite Kammer 1;2 sind teilweise mit einem Elektrolyten 4 gefüllt, der aus 2 M H₂SO₄ besteht.

Im Elektrolyten 4 sind zwei Elektroden 5a;5b für den Elektrolyseprozeß angeordnet. Die Elektrode 5a besteht aus einer Platte aus Al₂O₃-Keramik, auf die im UHV eine dünne Iridiumschicht aufgedampft wurde. Die Elektrode 5b besteht aus einer Platte aus Al₂O₃-Keramik, auf die im UHV eine dünne Platinschicht aufgedampft wurde. Als Haftvermittler diente bei beiden Elektroden 5a;5b Titan.

Außerdem enthalten die erste und die zweite Kammer 1;2 noch Elektroden 6a;6b für den Prozeß der kalten Verbrennung. Die Elektroden 6a;6b bestehen Platten aus Al₂O₃-Keramik, auf die im UHV eine dünne Platinschicht aufgedampft wurde. Als Haftvermittler diente Titan.

Die Elektroden 6a;6b schwimmen im Elektrolyten 4 derart, daß sie teilweise aus dem Elektrolyten herausragen. Die Elektroden 6a;6b sind über isolierte flexible Stromleiter 7 an den Stromausgang der Brennstoffzelle geführt. Oberhalb des Elektrolyten 4 befindet sich in der Kammer 1 das bei der Elektrolyse entstehende Sauerstoffgas und in der Kammer 2 das Wasserstoffgas. Zur Erzielung einer hohen Leistungsfähigkeit der Zelle sind die Elektroden 6a;6b im Bereich ihres Austritts aus dem Elektrolyten zur Bildung einer möglichst großen Oberfläche in mehrere Stege aufgefächert, so daß sich eine großflächige Dreiphasengrenze Elektrolyt/Elektrode/Gas ergibt.

Zum Betrieb der Zelle im Elektrolysemodus wird an die Elektroden 5a;5b eine Gleichspannung angelegt. Dadurch entstehen an der Elektrode 5a in der Kammer 1 Sauerstoffgas an der Elektrode 5b in der Kammer 2 Wasserstoffgas. Durch die gebildeten Gase wird ein Teil des Elektrolyten 4 aus den Kammern 1 und 2 über eine Leitung 8 in die dritte Kammer 3 gedrückt. Beim Betrieb der Zelle im Brennstoffzellenmodus werden der in der Kammer 1 gespeicherte Sauerstoff und der in der Kammer 2 gespeicherte Wasserstoff an den Elektroden 6a;6b zu Elektroenergie umgesetzt und die in der Kammer 3 gespeicherte Elektrolytflüssigkeit kann durch Leitung 8 in die Kammern 1;2 zurückfließen.

### Beispiel 2

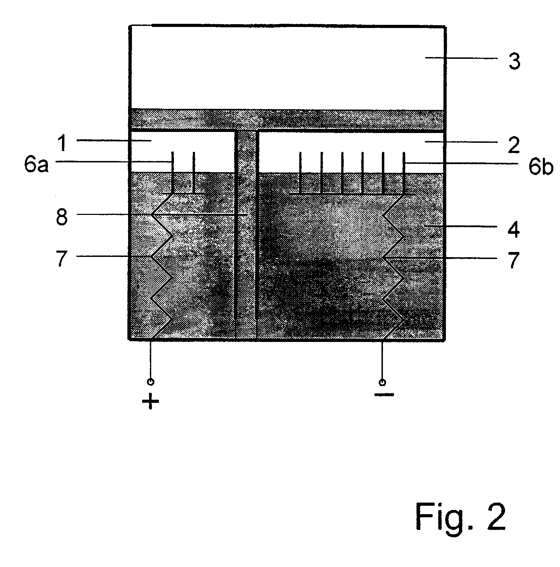

Die in Fig. 2 dargestellte regenerative Brennstoffzelle weist einen prinzipiell gleichen Aufbau wie die in Fig. 1 dargestellte Brennstoffzelle auf, jedoch werden hier die schwimmenden Elektroden 6a;6b auch für den Elektrolysemodus mitbenutzt; die bei der in Fig. 1 dargestellten Brennstoffzelle vorhandenen Elektroden 5a;5b entfallen deshalb hier.

Während des Betriebs der Zelle im Elektrolysemodus bildet sich an der in der Kammer 1 schwimmenden Elektrode 6a Sauerstoffgas und an der in der Kammer 2 schwimmenden Elektrode 6b wird Wasserstoffgas gebildet. Beim Betrieb der Zelle im Brennstoffzellenmodus werden der in der Kammer 1 gespeicherte Sauerstoff und der in der Kammer 2 gespeicherte Wasserstoff zu Elektroenergie umgesetzt, und die in der Kammer 3 gespeicherte Elektrolytflüssigkeit kann durch Leitung 8 in die Kammern 1;2 zurückfließen.

## Patentansprüche

1. Regenerative elektrochemische Brennstoffzelle mit flüssigem Elektrolyten (4) zur Umwandlung elektrischer Energie in chemische Energie mittels Elektrolyse und zur Umwandlung chemischer Energie in elektrische Energie mittels kalter Verbrennung, bestehend aus mehreren Kammern (1;2;3), die den flüssigen Elektrolyten (4) aufnehmen, die untereinander kommunizierend für den Elektrolyten (4) ausgeführt sind und die zumindest teilweise mit Elektroden (5a;5b;6a;6b) für die Elektrolyse und die kalte Verbrennung bestückt sind, wobei die Elektroden (6a;6b) für die kalte Verbrennung im Elektrolyten (4) schwimmend ausgeführt sind und mit einem Teil ihres Elektrodenkörpers teilweise aus dem Elektrolyten (4) herausragen.

2. Brennstoffzelle nach Anspruch 1, **dadurch gekennzeichnet**, daß die schwimmend ausgeführten Elektroden (6a;6b) zumindest in ihrem den Flüssigkeitsspiegel des Elektrolyten (4) durchdringenden Körperbereich eine oberflächenvergrößernde Geometrie aufweisen.

3. Brennstoffzelle nach Anspruch 1, **dadurch gekennzeichnet**, daß die schwimmend ausgebildeten Elektroden (6a;6b) über flexible Stromleiter (7) mit den Stromversorgungsanschlußpunkten der Brennstoffzelle verbunden sind.

4. Brennstoffzelle nach Anspruch 1, **dadurch gekennzeichnet**, daß außer den mit Elektroden bestückten Kammern (1;2) eine weitere Kammer (3) zur Aufnahme und Pufferung von Elektrolytflüssigkeit vorhanden ist.

## Claims

1. Regenerative electrochemical fuel cell with liquid electrolyte (4) for converting electrical energy into chemical energy by means of electrolysis and for converting chemical energy into electrical energy by means of cold combustion, composed of a plurality of chambers (1; 2; 3) which receive the liquid electrolyte (4) and which have been designed so as to be in communication with one another for the electrolyte (4), and at least some of which have been equipped with electrodes (5a; 5b; 6a; 6b) for the electrolysis and the cold combustion, where the electrodes (6a; 6b) for the cold combustion have been designed so as to be floating in the electrolyte (4) and have a part of their electrode body protruding to some extent out of the electrolyte (4).

2. Fuel cell according to Claim 1, **characterized in that** the electrodes (6a; 6b) designed so as to be floating have, at least in that region of their body which penetrates through the surface of the liquid of the electrolyte (4), a shape which increases surface area.

3. Fuel cell according to Claim 1, **characterized in that** the electrodes (6a; 6b) designed so as to be floating have been connected, via flexible electrical conductors (7), to the current-supply connection points of the fuel cell.

4. Fuel cell according to Claim 1, **characterized in that**, as well as the chambers (1; 2) equipped with electrodes, another chamber (3) is present for receiving electrolyte liquid and holding a reserve of the same.

## Revendications

1. Pile à combustible électrochimique régénérative avec un électrolyte (4) liquide pour la transformation d'énergie électrique en énergie chimique au moyen d'une électrolyse et pour la transformation d'énergie chimique en énergie électrique au moyen d'une combustion à froid, constituée de plusieurs chambres (1; 2; 3), qui reçoivent l'électrolyte (4) liquide, qui sont construites de façon à communiquer entre elles pour l'électrolyte (4) et qui sont au moins partiellement équipées d'électrodes (5a; 5b; 6a; 6b) pour l'électrolyse et la combustion à froid, les électrodes (6a; 6b) étant construites de façon à flotter dans l'électrolyte (4) pour la combustion à froid et émergeant partiellement de l'électrolyte (4) avec une partie de leur corps d'électrode.

2. Pile à combustible suivant la revendication 1, caractérisée en ce que les électrodes (6a; 6b) construites de façon flottante présentent une géométrie augmentant la surface au moins dans la zone de leur corps pénétrant la surface de liquide de l'électrolyte (4).

3. Pile à combustible suivant la revendication 1, caractérisée en ce que les électrodes (6a; 6b) formées de façon flottante sont reliées aux points de connexion d'alimentation en courant de la pile à combustible par des conducteurs flexibles (7) .

4. Pile à combustible suivant la revendication 1, caractérisée en ce que, outre les chambres (1; 2) équipées d'électrodes, une autre chambre (3) pour la réception et le tamponnage de liquide électrolytique est présente.
